# EUROPÄISCHE PATENTSCHRIFT

(11) **EP 1 155 293 B1**
(45) Veröffentlichungstag und Bekanntmachung des Hinweises auf die Patenterteilung: **23.01.2008**
(21) Anmeldenummer: 00991531.5
(22) Anmeldetag: 20.12.2000
(51) Int. Cl.: G01H 9/00, G01B 9/02, G01D 5/26

(54) **VERFAHREN ZUR ERZEUGUNG VON ZEITMARKEN BELIEBIGER PUNKTE AUF SICH BEWEGENDEN BAUTEILEN**
METHOD FOR PRODUCING TIME MARKS AT ANY POINTS ON MOVING COMPONENTS
PROCEDE POUR PRODUIRE DES REPERES TEMPORELS EN DES POINTS QUELCONQUES SUR DES COMPOSANTS EN DEPLACEMENT

(30) Priorität: 21.12.1999 DE 19961830
(43) Veröffentlichungstag der Anmeldung: 21.11.2001
(73) Patentinhaber: MTU Aero Engines GmbH, 80995 München (DE)
(72) Erfinder: HESSERT, Roland, 85229 Niederroth (DE); ZIELINSKI, Michael, 85716 Unterschleissheim (DE); ZILLER, Gerhard, 85221 Dachau (DE)
(86) Internationale Anmeldenummer: PCT/DE2000/004537
(87) Internationale Veröffentlichungsnummer: WO 2001/046654

(56) Entgegenhaltungen:
- WO-A-99/40398
- DE-A- 19 548 158
- US-A- 3 879 988
- US-A- 5 557 099
- PATENT ABSTRACTS OF JAPAN vol. 017, no. 609 (P-1640), 9. November 1993 (1993-11-09) & JP 05 187972 A (ISHIKAWAJIMA HARIMA HEAVY IND CO LTD), 27. Juli 1993 (1993-07-27)

## Beschreibung

Die Erfindung betrifft ein Verfahren zur Erzeugung von Zeitmarken beliebiger Punkte auf sich beweglichen Bauteilen sowie eine optische Triggereinrichtung zur Erzeugung solcher Zeitmarken.

Beispielsweise bei der Entwicklung moderner Turbinentriebwerke sind Schwingungsmessungen an den hochbelasteten , Schaufeln der Rotoren sehr wichtig. Kritische Schwingungen müssen frühzeitig erkannt werden. Gleichzeitig liefern die Messungen Daten für die Auslegungsprogramme und zur Abschätzung der Lebensdauer der Schaufeln. Die Messungen werden bislang in den meisten Fällen mit Dehnungsmessstreifen durchgeführt, was mit erheblichen Kosten und Vorlaufzeiten verbunden ist, da hierfür eine aufwendige, fliehkraftfeste Verkabelung und ein Telemetriesystem zur SignaIübertragung erforderlich sind.

US 3,879,988 zeigt ein Verfahren zur Schwingungsmessung, bei dem ein Laserstrahl in einen Messlichtzweig und einen Referenzlichtzweig aufgespalten wird, wobei das Licht im Messlichtzweig an einer Schaufel reflektiert wird. Aus der mittels Interferenz bestimmten Doppler-Frequenz wird die Schwingung bestimmt.

JP 05 187972 A offenbart ein Verfahren bei der aus für die Seite und die Vorderkante einer Schaufel erzeugten Hologramme Rückschlüsse auf die Schwingung gezogen werden.

Nach US 5, 557,099 können Triggersonden an unterschiedlichen Umfangspositionen im Gehäuse des zu vermessenden Bauteils, wie z. B. einer Turbinenschaufel eines Turbinenrotors, montiert werden, mit denen die Laufzeiten der Schaufeln zwischen den Sonden gemessen werden können. Ohne Schwingung sind die Laufzeiten durch Drehzahl, Rotorradius und Umfangsposition der Sonden bestimmt. Schwingungen führen zu einer Variation der Laufzeiten, da die Schaufeln - abhängig von der momentanen Phasenlage der Schwingbewegung - die Sonden früher oder später passieren. Aus den Abweichungen der Laufzeiten von den ungestörten Werten werden Amplitude und Frequenz der Schwingungen abgeleitet.

Zur Erzeugung der Zeit- bzw. Positionssignale von den Schaufeln werden im Gehäuse über dem Rotor Sonden eingebaut, die ein Signal liefern, wenn eine Schaufel mit ihrer Spitze den Messbereich der Sonden durchläuft. Aus den dabei hervorgerufenen Analogsignalen werden mit elektronischen Mitteln Zeitmarken abgeleitet, die mit einer definierten Position der Schaufelspitzen korreliert sind. In Sonderfällen können die Sonden auch in den Strömungskanal hineinragen. Es werden dann Triggersignale von der Vorder- oder Hinterkante der Schaufeln abgeleitet.

Ein wesentlicher Nachteil der bekannten Sondenkonfigurationen ist, dass Zeitmarken nur an den Kanten der Schaufeln erzeugt werden können, normalerweise an einer Stelle an der Schaufelspitze. Schwingformen, die dort gerade einen Knoten haben, werden nicht erfaßt. Beim Einbau der Sonden in den Strömungskanal wird die Strömung außerdem erheblich gestört.

Es ist deshalb Aufgabe der Erfindung, ein Verfahren zur Erzeugung von Zeitmarken zur Verfügung zu stellen, das an beliebigen Punkten beweglicher Bauteile Zeitmarken erzeugen kann. Es soll eine weitgehend flexible Anwendung und insbesondere eine freie Positionierbarkeit der Sonden ermöglichen. Weiterhin soll eine Vorrichtung zur Durchführung des Verfahrens vorgeschlagen werden.

Erfindungsgemäß wird ein Verfahren zur Erzeugung von Zeitmarken beliebiger Punkte beweglicher Bauteile vorgeschlagen, wobei Licht einer breitbandigen Lichtquelle in zwei Zweige, nämlich einen Messlichtzweig und einen Referenzlichtzweig, aufgespalten und in zwei Lichtleiter eingekoppelt wird, das Licht des Referenzlichtzweigs zumindest teilweise rückgekoppelt und das Licht des Messlichtzweigs in einem Messpunkt fokussiert wird und das rückgekoppelte Licht aus dem Referenzlichtzweig und dem Messlichtzweig zur Interferenz gebracht und von einem Detektor detektiert wird, die Lichtwege im Messlichtzweig bis zum Fokus und im Referenzlichtzweig bis zur Rückkoppelebene innerhalb der Kohärenzlänge des eingestrahlten Lichts gleich lang sind, wobei das Licht des Messlichtzweigs vom zu vermessenden Bauteil reflektiert wird und wobei aus der beim Durchlauf des Bauteils durch den Fokus entstehenden Modulation des interferierenden Lichts die Zeitmarke ermittelt wird.

Bei dem erfindungsgemäßen Verfahren wird eine breitbandige Lichtquelle eingesetzt. Das von dieser Lichtquelle ausgestrahlte Licht wird durch einen Strahlteiler in zwei Zweige aufgeteilt. Ein Anteil des Lichts wird in einen Messlichtleiter, der andere Teil in einen Referenzlichtleiter eingespeist. Das Licht des Messlichtzweigs tritt am Ende des Lichtleiters aus und wird vor dem Lichtleiter fokussiert. Der Fokus stellt den Messpunkt dar. Das Licht des Referenzlichtzweigs wird zumindest teilweise rückgekoppelt. Dies kann entweder direkt an der Endfläche des Lichtleiters geschehen oder durch einen separaten Spiegel erreicht werden.

Durchläuft ein sich bewegendes Bauteil den Fokus des Messlichtzweiges, wird ein Teil des Lichts reflektiert und in den Messlichtleiter rückgekoppelt. Die rückgekoppelten Anteile des Messlichtzweigs und des Referenzlichtzweigs werden dann zur Interferenz gebracht und von einem Detektor detektiert.

Die Anordnung sollte zunächst so abgeglichen werden, dass diese Bedingung gerade im Fokus des Messlichtzweigs erfüllt ist. Durchläuft dann ein Bauteil den Lichtstrahl des Messlichtzweigs im Fokus, erreicht die Intensität des reflektierten und in den Lichtleiter rückgekoppelten Lichts ein Maximum. Gleichzeitig kommt es zu einer Modulation der Lichtintensität am Detektor, wobei die Modulationsfrequenz von der Wellenlänge des verwendeten Lichts und von der Geschwindigkeit des Bauteils abhängt. Aus dieser Modulation des interferierenden Lichts wird die Zeitmarke ermittelt.

Vorzugsweise wird als Strahlteiler und zur Interferenz der rückgekoppelten Lichtanteile ein Michelson-Interferometer eingesetzt, wobei aber auch andere interferometische Anordnungen verwendbar sind.

Erfindungsgemäß wird weiterhin eine optische Triggereinrichtung zur Erzeugung von Zeitmarken beliebiger Punkte beweglicher Bauteile vorgeschlagen, bestehend aus einer breitbandigen Lichtquelle, Mitteln zur Aufspaltung des Lichts der Lichtquelle in zwei Zweige, nämlich einen Messlichtzweig und einen Referenzlichtzweig, die jeweils einen Lichtleiter und Mittel zum Einspeisen des Lichts in die jeweiligen Lichtleiter umfassen, Mitteln zur Fokussierung des aus dem Messlichtleiter austretenden Lichts in einem Messpunkt, Mitteln zur Rückkopplung des Lichts des Referenzlichtzweigs, Mitteln zur Interferenz des rückgekoppelten Lichts beider Zweige und einem Detektor zur Detektion des interferierten, rückgekoppelten Lichts, an dem es zu einer Modulation des Lichts kommt, wenn das Bauteil den Fokus durchläuft.

Mit der erfindungsgemäßen optischen Triggereinrichtung können Zeitmarken für beliebige Punkte beweglicher Bauteile erzeugt werden. Die erfindungsgemäße Triggereinrichtung umfaßt eine breitbandige Lichtquelle. Das aus dieser Lichtquelle austretende Licht wird in zwei Zweige aufgespalten, nämlich einen Messlichtzweig und einen Referenzlichtzweig. Das Licht des Messlichtzweigs wird in einen Messlichtleiter eingespeist, das Licht des Referenzlichtzweigs wird in einen Referenzlichtleiter eingespeist. Beide Lichtleiter führen zu einer Sonde. In dieser Sonde tritt das Licht aus dem Messlichtleiter aus und wird in einem Messpunkt fokussiert. Das Licht des Referenzlichtzweiges wird zumindest teilweise wieder in den Referenzlichtleiter rückgekoppelt. Dies kann entweder durch Reflexion an der Grenzfläche des Lichtleiters oder durch einen separaten Spiegel erreicht werden.

Durchläuft ein zu messendes Bauteil, beispielsweise eine Rotorschaufel eines Turbinentriebwerks, den Fokus des Messlichtzweigs, wird das Licht teilweise reflektiert und in den Messlichtleiter rückgekoppelt. Die rückgekoppelten Lichtanteile werden aus beiden Zweigen zusammengefaßt. Sie interferieren dann miteinander. Mit einem Detektor wird das interferierende, rückgekoppelte Licht beider Zweige detektiert. Durchläuft das zu messende Bauteil den Fokus des Messlichtzweigs, erreicht die Intensität des rückgekoppelten Lichts ein Maximum. Es kommt dann zu einer Modulation der Lichtintensität am Detektor, wobei die Modulationsfrequenz von der Wellenlänge des verwendeten Lichts und von der Geschwindigkeit des Bauteils abhängt.

In einer bevorzugten Weiterbildung der erfindungsgemäßen Einrichtung sind Mittel vorgesehen, die die optische Weglänge des Referenzlichtzweigs und/oder des Messlichtzweigs einstellbar machen. Dies kann beispielsweise durch eine axiale Justiermöglichkeit der Einkoppeloptiken zum Einkoppeln des aufgespaltenen Lichts der Lichtquelle in die Lichtleiter erfolgen.

Zur Aufspaltung des Lichts der Lichtquelle in zwei Zweige und zur Herbeiführung der Interferenz der rückgekoppelten Lichtanteile wird vorzugsweise ein Michelson-Interferometer verwendet. Alternativ kann aber auch ein Faser-interferometer eingesetzt werden.

Das Ende des Messlichtleiters und die Fokussieroptik sind vorzugsweise in einer Sonde zusammengefaßt, in der auch der Referenzlichtleiter enden kann. Die Messsonde ist leicht positionierbar. Vorzugsweise ist die Position des Fokus des Messlichtzweigs einstellbar, um eine Anpassung an die bei der Messung gegebenen Platzverhältnisse zu ermöglichen. Um eine optimale Anpassung an das zu vermessende Bauteil und dessen Zugänglichkeit zu erreichen, kann der Lichtstrahl aus dem Referenzlichtzweig schräg aus der Sonde austreten. Die Sonde kann hierzu mit einem schrägen Fenster versehen sein.

In einer Weiterbildung der erfindungsgemäßen Vorrichtung können in einer Sonde mehrere Lichtleiter zur gleichzeitigen Erzeugung von Triggersignalen von mehreren Punkten auf einer Bauteiloberfläche eingebaut werden.

Vorzugsweise verlaufen die beiden Lichtleiter des Mess- und Referenzlichtzweigs über ihre gesamte Länge in engem Kontakt. Dadurch treten optische Längenveränderungen durch Temperaturschwankungen, Schwingungen und ähnliche Effekte in beiden Zweigen in gleichem Maße auf und stören nicht

Der Referenzlichtzweig verfügt vorzugsweise Ober Mittel zum Dämpfen der Lichtintensität, um die Signalintensität auf die des Messzweigs abstimmbar zu machen. Dies kann durch eine Dämpfungsscheibe erfolgen.

Zur Aufteilung des Lichts auf beide Zweige und späterer Zusammenführung kann ein Faserinterferometer verwendet werden.

Die Ableitung einer genauen Zeitmarke aus dem hochfrequenten Ausgangssignal des Detektors läßt sich durch elektronische Mittel erreichen.

Bei der Vorrichtung können in einer Sonde mehrere Lichtleiter zur gleichzeitigen Erzeugung von Triggersignalen von mehreren Punkten auf eine Bauteiloberfläche eingebaut werden.

Die Erfindung wird im Folgenden anhand der beigefügten Abbildungen näher erläutert:
- **Fig. 1**: zeigt den schematischen Aufbau einer erfindungsgemäßen optischen Triggereinrichtung;
- **Fig.2**: zeigt den schematischen Aufbau einer erfindungsgemäßen optischen Triggereinrichtung mit faseroptischem Strahlteiler;
- **Fig. 3**: zeigt ein Ausgangssignal des Detektors und die daraus mögliche Ableitung einer genauen Zeitmarke.

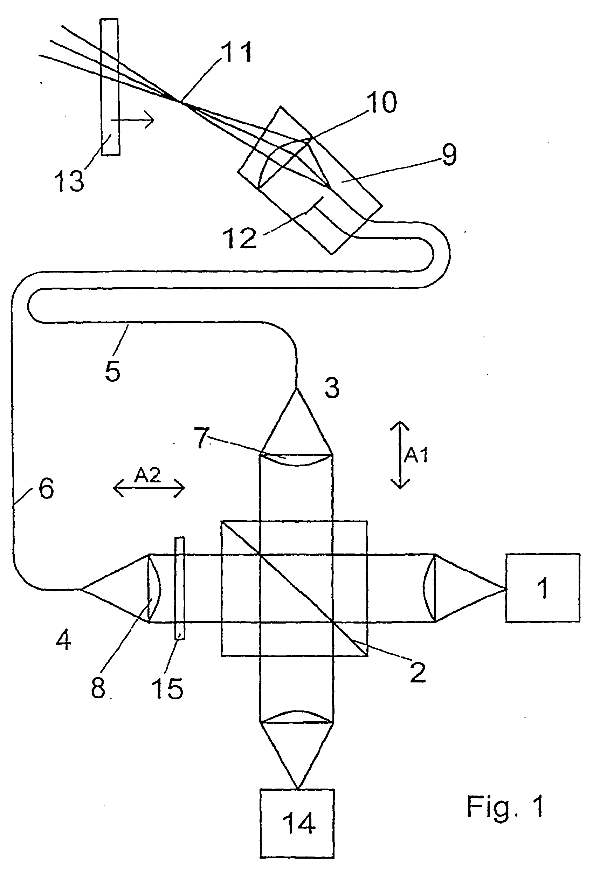

In **Fig. 1** ist eine breitbandige Lichtquelle **1** dargestellt, die im sichtbaren Bereich emittiert. Im vorliegenden Fall handelt es sich um eine Leuchtdiode mit der Wellenlänge λ = 630nm. Die Bandbreite beträgt Δλ = 50nm. Die Kohärenzlänge lₖ ergibt sich dann aus lₖ = λ²/ Δλ. Die Kohärenzlänge beträgt also etwa 8 µm. Das Licht der Lichtquelle wird in ein Michelson-Interferometer eingestrahlt, das über einen Strahlteiler **2** verfügt. Der Strahlteiler teilt das Licht der Lichtquelle **1** in einen Messlichtzweig **3** und einen Referenzlichtzweig **4** auf. Das Licht wird zunächst parallelisiert und nach der Aufspaltung durch die Linsensysteme **7** und **8** in die jeweiligen Lichtleiter 5, 6 eingespeist. Die Lichtleiter werden Ober einen möglichst großen Teil ihrer Länge in engem Kontakt gehalten. Dadurch treten optische Längenänderungen durch Temperaturschwankungen, Schwingungen und andere Effekte in beiden Zweigen gleich auf und stören nicht. In der Sonde **9** tritt das Licht aus dem Messlichtleiter **5** aus und wird durch ein Linsensystem **10** im Fokus **11** fokussiert. Das Licht des Referenzlichtleiters **6** wird an dessen Ende **12** zumindest teilweise rückgekoppelt.

Zur Erzeugung einer Zeitmarke wird ein zu messendes Bauteil **13,** beispielsweise eine Rotorschaufel eines Turbinentriebwerks, durch den Fokus **11** bewegt. Dadurch wird das Licht teilweise reflektiert und in den Messlichtleiter **5** rückgekoppelt. Das rückgekoppelte Licht trifft wiederum auf den Strahlteiler **2** des Michelson-Interferometers. Das Licht interferiert mit dem rückgekoppelten Licht des Referenzlichtzweigs **4** und wird vom Detektor 14 detektiert.

Am Detektor **14** kommt es zu einer Modulation der Lichtintensität, wenn die Wege beider Lichtzweige **3,4** innerhalb der Kohärenzlänge gleich sind. Deshalb ist die Anordnung zunächst so abzugleichen, dass diese Bedingung gerade im Fokus **11** vor der Sonde **9** erfüllt ist. Dafür ist im hier dargestellten Aufbau eine axiale Verstellmöglichkeiten **A1, A2** vorgesehen, um mit der Position des Fokus **11** möglichst große Freiheit zu haben.

Um die Signalintensität des Referenzlichtzweigs **4** an die Signalintensität des Messlichtzweigs **3** anpassen zu können, verfügt der Referenzlichtzweig **4** über eine Dämpfungsscheibe **15.**

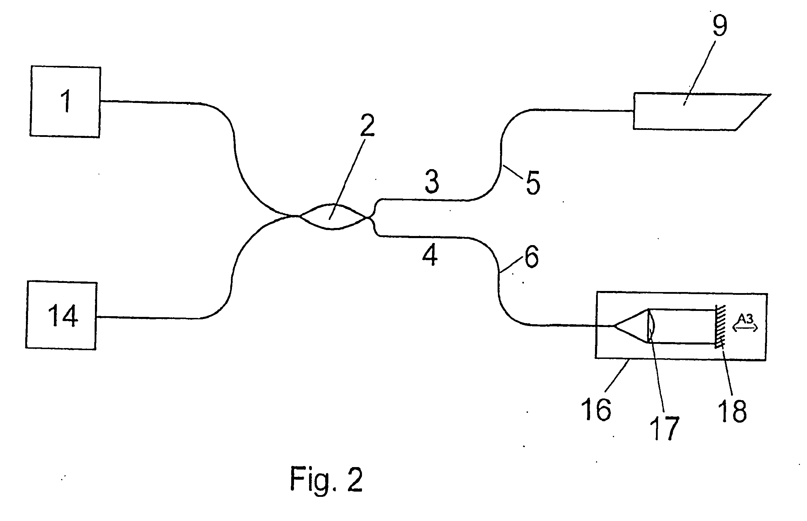

In **Fig. 2** ist eine prinzipiell gleich arbeitende optische Triggereinrichtung dargestellt, bei der ein faseroptischer Strahlteiler **2** zum Einsatz kommt. Das Licht der Lichtquelle **1** wird in eine Faser eingekoppelt und am faseroptischen Strahlteiler **2** in einen Messlichtzweig **3** und einen Referenzlichtzweig **4** aufgespalten. Der Messlichtleiter **5** führt zu einer Sonde **9,** die wie in Fig. 1 dargestellt und erläutert aufgebaut ist. Der Referenzlichtleiter **6** führt zu einer Verstelleinheit **16,** in der der Lichtstrahl durch eine geeignete Optik **17** parallelisiert und an einem Spiegel **18** reflektiert wird. Der Spiegel verfügt über eine Verstellmöglichkeit **A3.** Dadurch läßt sich die effektive optische Weglänge des Referenzlichtzweigs **4** einstellen. Der vor der Erzeugung von Zeitmarken erforderliche Abgleich der Weglängen beider Lichtzweige kann somit trotz fehlender Verstellmöglichkeit am faseroptischen Strahlteiler **2** erreicht werden.

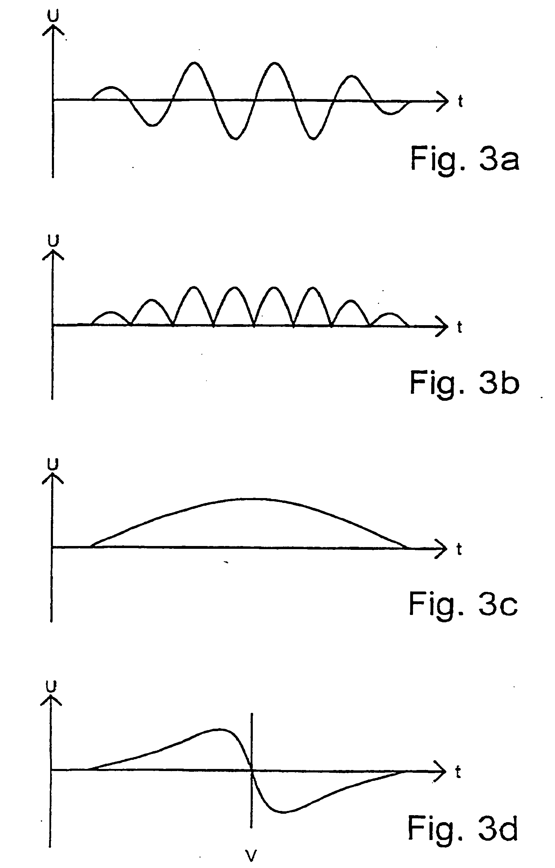

In **Fig. 3** ist das vom Detektor detektierte Signal und die nach einer beispielhaften Bearbeitung entstehenden Signale dargestellt Zur Erzeugung einer Zeitmarke bewegt sich das zu messende Bauteil, beispielsweise eine Turbinenschaufel, durch den Fokus des Messlichtzweiges. Dadurch wird das Licht reflektiert und teilweise in den Messlichtzweig rückgekoppelt. Das führt zu einer Modulation des am Detektor festzustellenden Signals. Bei einer Wellenlänge von beispielsweise 630 nm sowie Umfangsgeschwindigkeiten einer Turbinenschaufel im Bereich zwischen 10 und 500 m/s führt dies zu Modulationsfrequenzen von 30 bis 1.600 MHz. Nach Durchlaufen eines Hochpaßfilters hat das Signal die in **Fig. 3a** dargestellte Form. Nach Gleichrichtung wird dann das in **Fig. 3b** dargestellte Signal erreicht. Durch Einsatz eines Tiefpaßfilters nimmt das Signal die in **Fig. 3c** dargestellte Form an. Eine Zeitmarke V, wie sie in **Fig. 3d** dargestellt ist, kann z. B. nach Differentiation des Signals aus Fig. 3c beim negativen Nulldurchgang des entstehenden Signals gebildet werden.

## Patentansprüche

1. Verfahren zur Erzeugung von Zeitmarken beliebiger Punkte auf sich bewegenden Bauteilen (13), wobei Licht einer breitbandigen Lichtquelle (1) mit entsprechend kurzer Kohärenzlänge in zwei Zweige, nämlich einen Meßlichtzweig (3) und einen Referenzlichtzweig (4), aufgespalten und in zwei Lichtleiter (5,6) eingekoppelt wird, das Licht des Referenzlichtzweigs (4) zumindest teilweise rückgekoppelt und das Licht des Meßlichtzweigs (3) in einem Meßpunkt (11) fokussiert wird und das rückgekoppelte Licht aus dem Referenzlichtzweig (4) und dem Meßlichtzweig (3) zur Interferenz gebracht und von einem Detektor (14) detektiert wird, die Lichtwege im Meßlichtzweig (3) bis zum Fokus (11) und im Referenzlichtzweig (4) bis zur Rückkoppelebene (12, 18) innerhalb der Kohärenzlänge des eingestrahlten Lichts gleich lang eingestellt werden und das Licht im Meßlichtzweig (3) vom zu vermessenden Bauteil reflektiert wird und wobei aus der beim Durchlaufen des Bauteils durch den Fokus entstehenden Modulation des interferierenden Lichts die Zeitmarke ermittelt wird.

2. Verfahren nach Anspruch 1, **dadurch gekennzeichnet, daß** zur Aufspaltung des Lichts und zur Interferenz des rückgekoppelten Lichts ein Michelson-Interferometer verwendet wird.

3. Optische Triggereinrichtung zur Erzeugung von Zeitmarken beliebiger Punkte auf sich bewegenden Bauteilen (13) gemäß dem Verfahren nach Anspruch 1 oder 2, bestehend aus
- einer breitbandigen Lichtquelle (1) mit entsprechend kurzer Kohärenzlänge,
- Mitteln (2) zur Aufspaltung des Lichts der Lichtquelle (1) in zwei Zweige, nämlich einen Meßlichtzweig (3) und einen Referenzlichtzweig (4), die jeweils einen Lichtleiter (5,6) und Mittel (7,8) zum Einspeisen des Lichts in die jeweiligen Lichtleiter (5,6) umfassen, wobei die Lichtwege im Meßlichtzweig (3) bis zum Fokus und im Referenzlichtzweig (4) bis zur Rückkoppelebene (12,18) innerhalb der Kohärenzlänge des eingestrahlten Lichts gleich lang sind,
- Mitteln (10) zur Fokussierung des aus dem Meßlichtleiter (5) austretenden Lichts in einen Meßpunkt (11),
- Mitteln (12,18) zur Rückkopplung des Lichts des Referenzlichtzweigs (4)
- Mitteln (2) zur Interferenz des rückgekoppelten Lichts beider Zweige (3,4) und
- einem Detektor (14) zur Detektion des interferierenden, rückgekoppelten Lichts, und der Modulation des Lichts beim Durchlaufen des Bauteils (13) durch den Fokus (11).

4. Optische Triggereinrichtung nach Anspruch 3, **dadurch gekennzeichnet, daß** die optische Weglänge des Meßlichtzweigs (3) und/oder des Peferenzlichtzweigs (4) einstellbar sind.

5. Optische Triggereinrichtung nach Anspruch 3 oder 4, **dadurch gekennzeichnet daß** die Mittel (2) zur Aufspaltung und Interferenz des Lichts ein Michelson-Interferometer sind.

6. Optische Triggereinrichtung nach einem der Ansprüche 3 bis 5, **dadurch gekennzeichnet, daß** die Position des Fokus (11) des Meßlichtzweigs (3) einstellbar ist.

7. Optische Triggereinrichtung nach einem der Ansprüche 3 bis 6, **dadurch gekennzeichnet, daß** die Lichtintensität des Referenzlichtzweigs (4) einstellbar ist.

8. Optische Triggereinrichtung nach einem der Ansprüche 3 bis 7, **dadurch gekennzeichnet, daß** die Triggereinrichtung mehrere Meßlichtzweige (3) zur gleichzeitigen Erzeugung von Triggersignalen mehrerer Punkte auf sich bewegen den Bauteilen umfasst.

## Claims

1. Method for producing time marks at any points on moving components (13), in which light from a broad-band light source (1) with a correspondingly short coherence length is split into two branches, namely a measurement light branch (3) and a reference light branch (4), and passed into two light ducts (5, 6), the light in the reference light branch (4) is at least partially back-coupled and the light in the measurement light branch (3) is focused at a measurement point (11), and the back-coupled light in the reference light branch (4) and in the measurement light branch (3) are made to interfere and detected by a detector (14), the length of the light paths in the measurement light branch (3) up to the focus (11) and in the reference light branch (4) up to the back-coupling plane (12, 18) are equalised to within the coherence length, and the light in the measurement light branch (3) is reflected from the component to be measured, the time mark being determined from the modulation of the interfering light produced when the component passes through the focus.

2. Method according to Claim 1, **characterised in that** a Michelson interferometer is used to split the light and for the interference of the back-coupled light.

3. Optical triggering device for producing time marks at any points on moving components (13) in accordance with the method of Claims 1 or 2, which consists of:
- a broad-band light source (1) with a correspondingly short coherence length,
- means (2) for splitting the light from the light source (10 into two branches, namely a measurement light branch (3) and a reference light branch (4), which comprise in each case respective light ducts (5, 6) and means (7, 8) for passing the light into the respective light duct (5, 6), such that the light paths in the measurement light branch (3) as far as the focus and in the reference light branch (4) as far as the back-coupling plane (12, 18) are of equal length to within the coherence length of the incident light,
- means (10) for focusing the light emerging from the measurement light duct (5) at a measurement point (11),
- means (12, 18) for back-coupling the light in the reference light branch (4),
- means (2) for bringing about interference of the back-coupled light in the two branches (3, 4) and
- a detector (14) for detecting the interfering, back-coupled light and the modulation of the light when the component (13) passes through the focus (11).

4. Optical triggering device according to Claim 3, **characterised in that** the optical path lengths of the measurement light branch (3) and/or the reference light branch (4) are adjustable.

5. Optical triggering device according to Claims 3 or 4, **characterised in that** the means (2) for splitting the light and bringing about its interference consist of a Michelson interferometer.

6. Optical triggering device according to any of Claims 3 to 5, **characterised in that** the position of the focus (11) of the measurement light branch (3) is adjustable.

7. Optical triggering device according to any of Claims 3 to 6. **characterised in that** the light intensity of the reference light branch (4) is adjustable.

8. Optical triggering device according to any of Claims 3 to 7, **characterised in that** the triggering device comprises a plurality of measurement light paths (3) for the simultaneous production of triggering signals from several points on moving components.

## Revendications

1. Procédé pour générer des repères temporels en des points quelconques sur des composants en déplacement (13), la lumière d'une source lumineuse (1) à large bande étant divisée avec une longueur de cohérence en conséquence courte en deux branches, c'est-à-dire une branche de lumière de mesure (3) et une branche de lumière de référence (4), et étant injectée dans deux guides de lumière (5, 6), la lumière de la branche de lumière de référence (4) étant au moins en partie réinjectée et la lumière de la branche de lumière de mesure (3) étant concentrée en un point de mesure (11), et la lumière réinjectée provenant de la branche de lumière de référence (4) et de la branche de lumière de mesure (3) étant amenée à l'interférence et détectée par un détecteur (14), les trajets de lumière dans la branche de lumière de mesure (3) jusqu'au foyer (11) et dans la branche de lumière de référence (4) jusqu'au plan de réinjection (12, 18) étant réglés à la même longueur dans les limites de la longueur de cohérence de la lumière injectée et la lumière dans la branche de lumière de mesure (3) étant réfléchie par le composant à mesurer et le repère temporel étant déterminé à partir de la modulation de la lumière d'interférence qui se forme lors du passage des composants par le foyer.

2. Procédé selon la revendication 1, **caractérisé en ce qu'**un interféromètre de Michelson est utilisé pour la dissociation de la lumière et pour l'interférence de la lumière réinjectée.

3. Dispositif de déclenchement optique pour générer des repères temporels en des points quelconques sur des composants en déplacement (13) selon le procédé selon la revendication 1 ou 2, comprenant :
- une source lumineuse (1) à large bande avec une longueur de cohérence en conséquence courte,
- des moyens (2) pour la dissociation de la lumière de la source lumineuse (1) en deux branches, c'est-à-dire une branche de lumière de mesure (3) et une branche de lumière de référence (4), qui comprennent chacune un guide de lumière (5, 6) et des moyens (7, 8) pour l'injection de la lumière dans les guides de lumière (5, 6) concernés, les trajets lumineux dans la branche de lumière de mesure (3) jusqu'au foyer et dans la branche de lumière de référence (4) jusqu'au plan de réinjection (12, 18) étant de longueur identique dans les limites de la longueur de cohérence de la lumière injectée,
des moyens (10) pour la focalisation de la lumière sortant du guide de lumière de mesure (5) en un point de mesure (11),
- des moyens (12, 18) pour la réinjection de la lumière de la branche de lumière de référence (4),
- des moyens (2) pour l'interférence de la lumière réinjectée des deux branches (3, 4) et
- un détecteur (14) pour la détection de la lumière réinjectée et interférant et pour la modulation de la lumière lors du passage du composant (13) par le foyer (11).

4. Dispositif de déclenchement optique selon la revendication 3, **caractérisé en ce que** la longueur de trajet optique de la branche de lumière de mesure (3) et/ou de la branche de lumière de référence (4) sont réglables.

5. Dispositif de déclenchement optique selon la revendication 3 ou 4, **caractérisé en ce que** les moyens (2) pour la dissociation et l'interférence de la lumière sont un interféromètre de Michelson.

6. Dispositif de déclenchement optique selon l'une quelconque des revendications 3 à 5, **caractérisé en ce que** la position du foyer (11) de la branche de lumière de mesure (3) est réglable.

7. Dispositif de déclenchement optique selon l'une quelconque des revendications 3 à 6, **caractérisé en ce que** l'intensité lumineuse de la branche de lumière de référence (4) est réglable.

8. Dispositif de déclenchement optique selon l'une quelconque des revendications 3 à 7, **caractérisé en ce que** le dispositif de déclenchement comprend plusieurs branches de lumière de mesure (3) pour la génération simultanée de signaux de déclenchement en plusieurs points sur des composants en déplacement.
